# EUROPÄISCHE PATENTSCHRIFT

(11) **EP 3 456 556 B1**
(45) Veröffentlichungstag und Bekanntmachung des Hinweises auf die Patenterteilung: **12.02.2020**
(21) Anmeldenummer: 18192375.6
(22) Anmeldetag: 04.09.2018
(51) Int. Cl.: B60D 5/00, B61D 17/22, B62D 47/02, B64F 1/305

(54) **GELENKFAHRZEUG**
ARTICULATED VEHICLE
VÉHICULE ARTICULÉ

(30) Priorität: 14.09.2017 DE 102017121325
(43) Veröffentlichungstag der Anmeldung: 20.03.2019
(73) Patentinhaber: Hübner GmbH & Co. KG, 34123 Kassel (DE)
(72) Erfinder: Jünke, Volker, 34123 Kassel (DE); Goebels, André, 34134 Kassel (DE)
(74) Vertreter: Patentanwälte Walther Hinz Bayer PartGmbB

(56) Entgegenhaltungen:
- EP-A1- 0 329 031
- EP-A1- 0 537 670
- EP-A1- 0 685 376
- EP-A1- 2 942 255
- WO-A1-2018/137758
- FR-A- 610 763

## Beschreibung

Die Erfindung betrifft ein aus mehreren gelenkig miteinander verbundenen Fahrzeugen oder Fahrzeugteilen ausgebildetes Gelenkfahrzeug, zum Beispiel ein Schienenfahrzeug oder ein Gelenkbus, wobei zwischen zwei Fahrzeugen oder Fahrzeugteilen ein Übergang angeordnet ist, wobei der Übergang eine Innen- sowie mit seitlichem Abstand dazu eine Außenverkleidung aufweist, wobei mindestens eine Verkleidung als Balg ausgebildet ist, wobei die Innen- und/oder Außenverkleidung tunnel- oder U-förmig umlaufend ausgebildet ist, wobei durch Innen- und Außenverkleidung sowie die beiden Stirnwände der Fahrzeuge oder Fahrzeugteile ein im Wesentlichen geschlossener Hohlraum gebildet ist, wobei zur Führung des Mediums durch den einen im Wesentlichen geschlossenen Hohlraum der Hohlraum mindestens eine erste und eine zweite Öffnung zur Medienzu- und abführung aufweist.

Eine Balgordnung mit einem Balg ist beispielsweise aus der EP 2 942 255 A1 bekannt, die den nächstliegenden Stand der Technik bildet. Üblicherweise umspannt der Balg der Balganordnung als Teil einer Übergangseinrichtung einen Übergang, zum Beispiel eine Brücke oder eine Plattform, um Personen das Hinüberwechsel von einem Fahrzeug oder Fahrzeugteil in das andere Fahrzeug oder Fahrzeugteil eines Gelenkfahrzeuges zu ermöglichen. Gegebenenfalls umspannt der Balg nicht nur den Übergang, sondern auch die unter dem Übergang befindliche Gelenkverbindung. Die Balganordnung kann darüber hinaus auf der Innenseite der Seitenwand des Balges eine sogenannte Spurfugen- oder Bodenabdeckung aufweisen. Unter einer Spurfugenabdeckung versteht man eine Schürze, die den Abstand zwischen dem seitlichen Ende der Plattform oder der Brücke einerseits und der Seitenwand des inneren Balges der Balganordnung andererseits abdeckt. In diesem Zusammenhang ist des Weiteren aus der bereits zuvor erwähnten EP 2 942 255 A1 bekannt, innerhalb der Spurfugenabdeckung, die winklig zur Seitenwand des Balges der Balganordnung verläuft, einen Luftführungskanal vorzusehen. Der Luftführungskanal dient insbesondere dem Transport von klimatisierter Luft von dem einen Fahrzeugteil zu dem gelenkig damit verbundenen anderen Fahrzeugteil. Insofern fungiert der Hohlraum, der einerseits durch die Spurfugenabdeckung und andererseits durch die Seitenwand des inneren Balges der Balganordnung gebildet wird, als Klimakanal.

Aus der EP 2 468 600 A ist eine Balganordnung in Form eines sogenannten Doppelwellenbalgs bekannt. Bekannt ist bei einem solchen Doppelwellenbalg insbesondere, dass zwischen dem Außenbalg und dem Innenbalg insbesondere im Dachbereich längsverlaufend und seitlich beabstandet zueinander zwei balgförmige Stege vorgesehen sind, wobei durch die Stege in Verbindung mit den beiden Bälgen ein Klimakanal zur Führung klimatisierter Luft von dem einen Fahrzeugteil zu dem anderen Fahrzeugteil gebildet wird.

Sowohl der Lehre der zuvor genannten EP 2 942 255 A1 als auch der EP 2 468 600 A ist gemein, dass die Luftführung immer zwischen den Fahrzeugteilen, das heißt den Stirnseiten der Wagenkästen der gelenkig miteinander verbundenen Fahrzeuge erfolgt. Das heißt, in der Stirnwand der Wagenkästen der beiden gelenkig miteinander verbundenen Fahrzeuge sind Öffnungen vorgesehen, die durch den besagten Klimakanal miteinander verbunden sind.

Insbesondere aus dem Schienenfahrzeugbau sind darüber hinaus Fahrzeuge bekannt, die unterflurig angeordnete Antriebsmotoren aufweisen. Derartige Antriebsmotoren müssen bei Betrieb gekühlt werden, da sie üblicherweise zum Schutz vor Verschmutzung und Feuchtigkeit gekapselt sind.

Insofern besteht nicht nur ein Bedürfnis saubere Luft zur Kühlung von Antriebsmotoren bereitzustellen, sondern solche Frischluft auch in das Innere des Übergangs zu führen, um dort für Sauerstoffzufuhr zu sorgen.

Die der Erfindung zugrundeliegende Aufgabe besteht insofern darin, eine preiswerte Frischluftzufuhr bereitzustellen, bei der keine aufwendigen konstruktiven Maßnahmen getroffen werden müssen.

Zur Lösung der Aufgabe wird erfindungsgemäß vorgeschlagen, dass die mindestens eine erste Öffnung die Öffnung in einem ersten Balg ist und wobei auf der mindestens einen ersten Öffnung ein Flansch aufsitzt.

Hierbei kann in einer Variante vorgesehen sein, dass die mindestens eine zweite Öffnung die Öffnung in einem Balg ist oder in einer Stirnwand. Somit bestehen verschiedene Möglichkeiten der Luftführung; zum einen kann vorgesehen sein, dass wenn eine Außen- und Innenverkleidung vorgesehen ist, beispielsweise in Form von jeweils einem Balg, dass die Luftzufuhr über die Außenverkleidung und die Abfuhr ebenfalls über die Außenverkleidung erfolgt, sodass der Hohlraum zwischen Innen- und Außenverkleidung der Luftführung dient. Alternativ kann vorgesehen sein, über die Außenverkleidung Frischluft zuzuführen, und über eine Öffnung in der Innenverkleidung die Frischluft in das Innere des Übergangs zu transportieren. Die Öffnung in der Innenverkleidung kann hierbei auch durch einen Abstand zwischen Innenverkleidung und Boden des Übergangs gebildet werden. Weiterhin kann vorgesehen sein, die Zufuhr von Frischluft über eine Öffnung in der Stirnwand im Bereich des Hohlraumes zu ermöglichen, und die Abfuhr über den Außenbalg oder den Innenbalg zu bewerkstelligen. Vorteilhaft ist nicht nur die mindestens eine erste Öffnung mit einem Flansch versehen, vielmehr weist vorteilhaft auch mindestens die eine zweite Öffnung einen ebensolchen Flansch auf.

Nach einem weiteren Merkmal der Erfindung ist vorgesehen, dass mindestens der äußere Balg als Wellen- oder Faltenbalg mit einer Mehrzahl von hintereinander angeordneten Balgelementen in Form von Wellen oder Falten ausgebildet ist. Sind sowohl die Innenverkleidung als auch die Außenverkleidung jeweils als Balg ausgebildet, das heißt, weist sowohl der äußere als auch der innere Balg mehrere Balgelemente auf, ist vorteilhaft vorgesehen, dass der Flansch auf mindestens einer Öffnung eines einzigen Balgelementes aufsitzt, beispielsweise auf dem Scheitel eines wellenförmigen Balgelements.

Hierbei ist der Flansch trapezförmig und im Bereich des Balgelements nach Art eines Kanalelements ausgebildet. Der nach Art eines Kanalelements ausgebildete Flansch ist in der Größe, das heißt bezogen auf die Breite, dem Balgelement, auf dem der Flansch mit dem Kanalelement aufsitzt, nachempfunden. Die Öffnung im Balgelement ist entsprechend der länglichen Ausbildung des Flansches ebenfalls länglich ausgebildet, um die Möglichkeit zu schaffen, einen ausreichenden Volumenstrom über ein einziges Balgelement in das Innere des Doppelwellenbalges zuführen. Theoretisch wäre denkbar, über mehrere Balgelemente einen Flansch zu setzen, was dann allerdings den Nachteil hätte, dass der äußere Balg in dem Bereich eines solchen Flansches nicht mehr die vorgesehene maximale Dehnung erreichen würde.

Vorteilhafte Merkmale und Ausgestaltungen der Erfindung ergeben sich aus den Unteransprüchen.

Es ist vorteilhaft vorgesehen, dass wenn die Balganordnung durch jeweils einen Anschlussrahmen mit der Stirnseite des Wagenkastens des jeweiligen Fahrzeugs verbunden ist, dass zumindest der eine Flansch auf dem ersten vollständigen Balgelement nach dem Anschlussrahmen aufsitzt. Dies deshalb, weil sich herausgestellt hat, dass die Balgelemente, die zur Mitte des Übergangs hin angeordnet sind, beispielsweise bei Kurvenfahrt eine größere Dehnung erfahren als die Balgelemente, die sich unmittelbar im Bereich der Wagenkästen der gelenkig miteinander verbundenen Fahrzeuge befinden. Das heißt, hierdurch wird die Dehnfähigkeit des Balges nicht oder nicht wesentlich beeinträchtigt.

Mindestens der erste Flansch, vorteilhaft allerdings beide Flansche, die auf den Bälgen angeordnet sind, sind aus einem flexiblen Material ausgebildet, wobei das flexible Material insbesondere einen mit einem Elastomer beschichteten Festigkeitsträger, zum Beispiel ein Gewebe, Gewirk oder Gestrick, umfasst.

Es wurde bereits an anderer Stelle darauf hingewiesen, dass die einzelnen Balgelemente, und hier insbesondere die einzelnen Wellen eines Wellenbalges durch umlaufende Balgrahmen miteinander verbunden sind. Der jeweilige Flansch, der zwei längliche Schenkel aufweist, ist hierbei derart auf dem Wellenelement angeordnet, dass die beiden länglichen Schenkel unter Bildung des bereits erwähnten Kanalelements durch die Balgrahmen, die, wie bereits ausführt, die einzelnen Wellen miteinander verbinden, ebenfalls klemmend erfasst sind. Es wurde bereits darauf hingewiesen, dass der erste und/oder zweite Flansch in der Ansicht in etwa trapezförmig ausgebildet ist, und mit seinem langen Schenkel mit dem entsprechenden Balgelement in Verbindung steht. Am gegenüberliegenden Ende bilden die Schenkel nach einem weiteren Merkmal der Erfindung einen vorteilhaft runden Anschlussstutzen, um beispielsweise ein Gebläse als Luft- oder Abführung anzuordnen. Denkbar ist in diesem Zusammenhang zur Luftzuführung auch einen gegen die Fahrtrichtung ausrichtbaren Schlauch vorzusehen, sodass für die Luftzuführung der Staudruck ausgenutzt wird. In diesem Zusammenhang kann der Anschlussstutzen über einen Anschlussring, beispielsweise aus Metall oder Kunststoff verfügen, wobei der Anschlussring klemmbar mit dem flexiblen Material des Anschlussstutzens des entsprechenden Flansches verbindbar ist. Hierzu kann der Anschlussring eine im Querschnitt U-förmigen Nut aufweisen, wobei in der Nut das Material des Anschlussstutzens einliegt, um dann durch Krimpen den Anschlussring mit dem Anschlussstutzen zu verbinden.

Das am Anschlussring des Flansches angeordnete Gebläse, das in Abhängigkeit von der Leistung ein nicht unerhebliches Gewicht aufweist, stützt sich üblicherweise auf dem Fahrzeugdach ab. Um zu vermeiden, dass bei einer Relativbewegung zwischen dem Flansch einerseits und dem Gebläse andererseits der Flansch bzw. der Balg Schaden nimmt, ist nach einem weiteren Merkmal der Erfindung vorgesehen, dass der erste und/oder zweite Flansch einen Kompensator aufweist. Der Kompensator ist hierbei vorteilhaft im Bereich des Anschlussstutzens am Flansch angeordnet und kann nach Art mindestens einer umlaufenden Welle oder Falte ausgebildet sein.

Es wurde bereits darauf hingewiesen, dass vorteilhaft beispielsweise der erste Flansch im Dachbereich des äußeren Balgs und der zweite Flansch im Bodenbereich des inneren Balges angeordnet ist, sodass der Innenraum oder Hohlraum des Doppelwellenbalges insgesamt der Luftführung dient. Wie an anderer Stelle erwähnt, kann allerdings der zweite Flansch auch im Bodenbereich der äußeren Befestigung angeordnet sein.

Anhand der Zeichnungen wird die Erfindung nachstehend beispielhaft näher erläutert.
- Fig. 1: zeigt das Gelenkfahrzeug in einer schematischen Darstellung;
- Fig. 2: zeigt die Übergangseinrichtung in einer perspektivischen Darstellung mit dem ersten Flansch und einem zweiten Flansch;
- Fig. 3: zeigt einen Teil eines Schnitts durch die Balganordnung aus Fig. 2;
- Fig. 4: zeigt einen Schnitt gemäß der Linie IV-IV aus Fig. 3;
- Fig. 5: zeigt im Detail die Ausbildung des Anschlussstutzens mit dem Anschlussring;
- Fig. 6a bis 6e: zeigen Varianten für die Luftführung in dem Hohlraum eines Übergangs mit Innen- und Außenverkleidung.

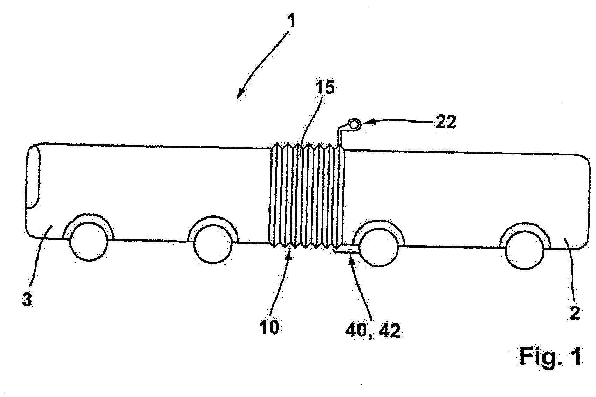

Fig. 1 zeigt ein Gelenkfahrzeug 1, mit zwei gelenkig miteinander verbundenen Fahrzeugen oder Fahrzeugteilen 2, 3, die durch eine Übergangseinrichtung 10 miteinander verbunden sind. Die Übergangseinrichtung 10 umfasst eine Balganordnung 15, sowie ein im Dachbereich der Balganordnung 15 angeordnetes Gebläse 30.

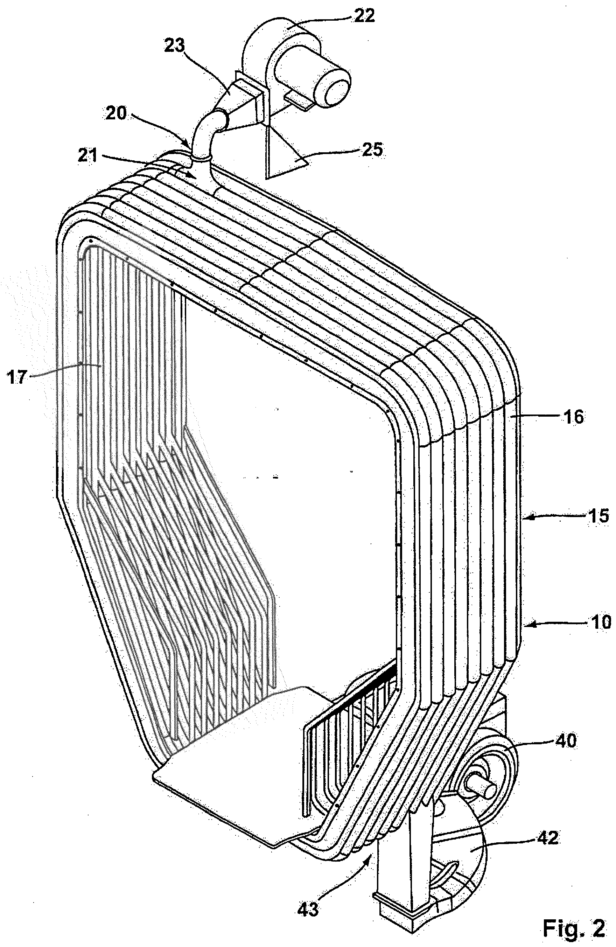

Die mit 10 bezeichnete Übergangseinrichtung findet sich in vergrößerter Darstellung in Fig. 2. Die Übergangseinrichtung 10 umfasst die Balganordnung 15 mit dem äußeren Balg 16 und dem inneren Balg 17, die unter Bildung eines Hohlraumes beabstandet zueinander verlaufen. Der durch den inneren und den äußeren Balg der Balganordnung 15 gebildete Hohlraum ist gegenüber der Umgebung abgeschlossen. Auf dem äußeren Balg befindet sich im Dachbereich des Balges der erste Flansch 20, der mit einem Gebläse 22 in Verbindung steht. Zwischen dem Flansch 20 und dem Gebläse 22 befindet sich ein Luftführungskanal 23. Das Gebläse einschließlich des Luftführungskanals stützt sich durch die Stütze 25 auf dem Dach des Fahrzeugteiles 2 ab.

Auf der Unterseite des Fahrzeugteils 2 befindet sich der mit 40 bezeichnete Antriebsmotor. Der Antriebsmotor steht über einen Luftführungskanal 42 mit dem zweiten Flansch 43, der im Bodenbereich des äußeren Balges 16 angeordnet ist, in Verbindung. Durch den äußeren und den inneren Balg wird der Hohlraum 36 gebildet, der somit der Luftführung zwischen den beiden Flanschen dient. Der zweite Flansch 43 ist ähnlich oder gleich ausgebildet wie der erste Flansch, weshalb in diesem Zusammenhang auf die Ausführungen zu dem ersten Flansch verwiesen wird.

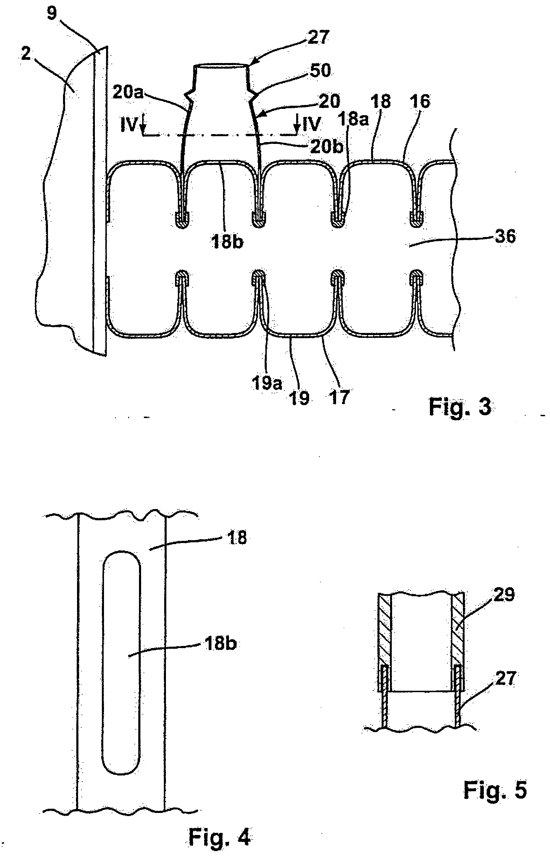

Die Ausbildung des Flansches ergibt sich insbesondere in Anschauung von Fig. 3. Der schematisch angedeutete Wagenkasten des Fahrzeugteils 2 weist stirnseitig den Anschlussrahmen und einerseits den äußeren Balg 16 auf und andererseits den inneren Balg 17 auf. Der äußere Balg umfasst eine Mehrzahl von Balgelementen 18 in Form von Wellen, die durch Balgrahmen 18a miteinander verbunden sind. Gleiches gilt für den inneren Balg 17, der Balgelemente 19 aufweist, die ebenfalls durch Balgrahmen 19a miteinander in Verbindung stehen.

Schematisch erkennbar ist aus Fig. 3 ebenfalls die Anordnung des Flansches 20 auf dem äußeren Balg 16. Der Flansch 20 umfasst zur Bildung eines Kanalelements 21 die beiden Flanschschenkel 20a, 20b, die ebenfalls durch die Balgrahmen 18a, die auch der Verbindung der einzelnen Balgelemente 18 dienen, klemmend erfasst sind. Am oberen Ende bilden die Schenkel 20a, 20b den Anschlussstutzen 27, wobei im Bereich des Anschlussstutzens ein Kompensator 50 vorgesehen ist, wobei der Kompensator 50 nach Art einer Welle oder Falte ausgebildet ist, und umlaufend an dem Anschlussstutzen 27 angeordnet ist. Der Kompensator 50 dient, wie dies ebenfalls bereits beschrieben worden ist, dem Ausgleich von Relativbewegungen zwischen dem am Dach angeordneten Gebläses und der Balganordnung.

Der äußere Balg 16 und der innere Balg 17 verlaufen unter Bildung eines geschlossenen Hohlraumes 36 beabstandet zueinander. Wie sich aus der Darstellung gemäß Fig. 4 ergibt, ist der Flansch 20, der in der Ansicht etwa trapezförmig ist bzw. nach Art eines liegenden Kanals ausgebildet ist, auf dem ersten vollständigen Balgelement 18 nach dem Anschlussrahmen 9 angeordnet. Um die Luft nunmehr über den Flansch 20 in den geschlossenen Hohlraum zu transportieren, weist das Balgelement 18 im Bereich der Überdeckung eine längliche Öffnung 18b auf. In gleicher Weise ist auch der zweite Flansch ausgebildet und auch auf dem Balgelement angeordnet.

Der mit 27 bezeichnete Anschlussstutzen des Flansches 20 zeigt einen Anschlussring 29, zur Aufnahmen des Luftführungskanals 23 des Gebläses 22.

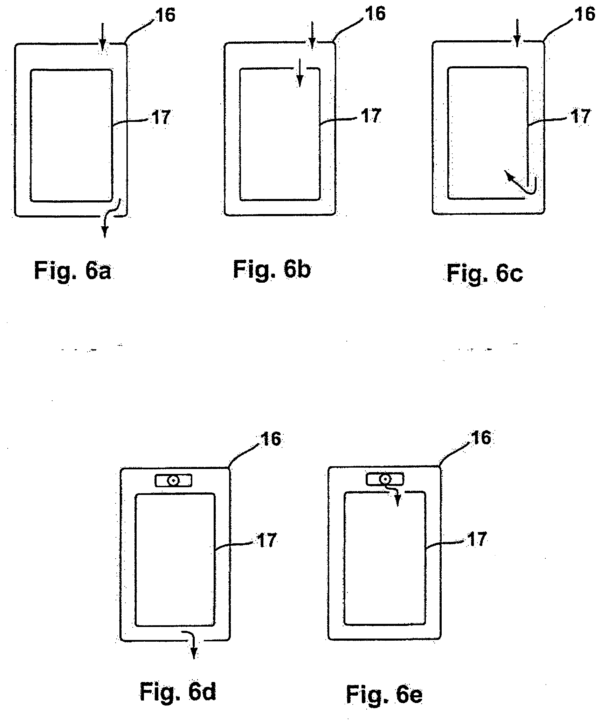

Fig. 6a bis Fig. 6e zeigen Varianten für die Luftführung in dem Hohlraum eines Übergangs mit Innen- und Außenverkleidung, vorzugsweise mit einer Innen- und einer Außenverkleidung in Form eines Falten- oder Wellenbalges. Hierbei erfolgt in Fig. 6a die Zuführung durch den Außenbalg und die Abführung ebenfalls durch den Außenbalg. Bei Fig. 6b wird die Luft durch den Außenbalg zu und durch den Innenbalg in den Innenraum des Übergangs abgeführt. Fig. 6c zeigt eine Variante zu Fig. 6b insofern, als dort die durch den Außenbalg zugeführte Luft im Bereich des Übergangs vom im Querschnitt U-förmigen Innenbalg zum Boden in den Innenraum des Übergangs geführt wird.

Bei der Fig. 6d ist vorgesehen, dass die Luftzuführung im Bereich des Hohlraumes, der durch die Stirnwände der beiden gelenkig miteinander verbundenen Wagenkästen und die beiden Bälge gebildet wird, in der Stirnwand erfolgt, wobei die Abfuhr im Bodenbereich des Außenbalges vorgenommen wird.

Fig. 6e unterscheidet sich von Fig. 6d dadurch, dass die Luftabfuhr über den Innenbalg in das Innere des Übergangs erfolgt

### Bezugszeichenliste:

- 1: Gelenkfahrzeug
- 2: Fahrzeug (Fahrzeugteil)
- 3: Fahrzeug (Fahrzeugteil)
- 9: Anschlussrahmen
- 10: Übergangseinrichtung
- 15: Balganordnung
- 16: äußerer Balg
- 17: innerer Balg
- 18: Balgelement des äußeren Balges
- 18a: Balgrahmen
- 18b: längliche Öffnung
- 19: Balgelement des inneren Balges
- 19a: Balgrahmen
- 20: erster Flansch
- 20a: Schenkel des ersten Flansches
- 20b: Schenkel des ersten Flansches
- 21: Kanalelement
- 22: Gebläse
- 23: Luftführungskanal
- 25: Stütze
- 27: Anschlussstutzen
- 29: Anschlussring
- 36: Hohlraum in der Balganordnung
- 40: Antriebsmotor
- 42: Luftführungskanal
- 43: zweiter Flansch
- 50: Kompensator

## Patentansprüche

1. Aus mehreren gelenkig miteinander verbundenen Fahrzeugen oder Fahrzeugteilen ausgebildetes Gelenkfahrzeug, zum Beispiel ein Schienenfahrzeug oder ein Gelenkbus, wobei zwischen zwei Fahrzeugen (2, 3) oder Fahrzeugteilen ein Übergang (10) angeordnet ist, wobei der Übergang (10) eine Innen- sowie mit seitlichem Abstand dazu eine Außenverkleidung aufweist, wobei mindestens eine Verkleidung als Balg (16, 17) ausgebildet ist, wobei die Innen-und/oder Außenverkleidung tunnel- oder U-förmig umlaufend ausgebildet ist, wobei durch Innen- und Außenverkleidung sowie die beiden Stirnwände der Fahrzeuge oder Fahrzeugteile ein im Wesentlichen geschlossener Hohlraum ausbildbar ist, wobei zur Führung eines Mediums durch den einen im Wesentlichen geschlossenen Hohlraum der Hohlraum mindestens eine erste und eine zweite Öffnung zur Medienzu- oder -abführung aufweist,
**dadurch gekennzeichnet,**
**dass** die mindestens eine erste Öffnung die Öffnung in dem äußeren Balg (16, 17) ist und wobei auf der mindestens einen ersten Öffnung ein Flansch (20) aufsitzt.

2. Übergang (10) nach Anspruch 1,
**dadurch gekennzeichnet,**
**dass** die mindestens eine zweite Öffnung die Öffnung in dem inneren Balg (17) ist.

3. Übergang (10) nach Anspruch 2,
**dadurch gekennzeichnet,**
**dass** die mindestens eine zweite Öffnung einen Flansch (43) aufweist.

4. Übergang (10) nach einem der voranstehenden Ansprüche,
**dadurch gekennzeichnet,**
**dass** mindestens der äußere Balg (16) als Wellen- oder Faltenbalg mit einer Mehrzahl von hintereinander angeordneten Balgelementen (18) in Form vom Wellen oder Falten ausgebildet ist.

5. Übergang (10) nach einem der voranstehenden Ansprüche,
**dadurch gekennzeichnet,**
**dass** der innere und der äußere Balg (16, 17) mehrere Balgelemente (18, 19) aufweist, wobei der Flansch (20, 43) auf mindestens einer Öffnung eines einzigen Balgelements aufsitzt.

6. Übergang (10) nach einem der voranstehenden Ansprüche,
**dadurch gekennzeichnet,**
**dass** eine Balganordnung (15) aus Innen- und Außenbalg durch jeweils einen Anschlussrahmen (9) mit der Stirnseite des Wagenkastens des jeweiligen Fahrzeugs (2, 3) verbunden ist, wobei zumindest der erste Flansch (20) auf dem ersten vollständigen Balgelement (18) des äußeren Balges (16) nach dem Anschlussrahmen (9) aufsitzt.

7. Übergang (10) nach einem der voranstehenden Ansprüche,
**dadurch gekennzeichnet,**
**dass** der erste und/oder zweite Flansch (20, 43) ein Kanalelement zur Verbindung mit dem Balgelement (18) aufweisen, dessen Erstreckung in Längsrichtung des Balgelements (18) größer ist als quer zur Längsrichtung des Balgelements (18).

8. Übergang (10) nach einem der voranstehenden Ansprüche,
**dadurch gekennzeichnet,**
**dass** der erste und/oder zweite Flansch (20, 43) aus einem flexiblen Material ausgebildet sind.

9. Übergang (10) nach Anspruch 8,
**dadurch gekennzeichnet,**
**dass** das flexible Material des ersten und/oder zweiten Flansches (20, 43) zumindest einen mit einem Elastomer beschichteten Festigkeitsträger umfasst.

10. Übergang (10) nach einem der voranstehenden Ansprüche,
**dadurch gekennzeichnet,**
**dass** die einzelnen Balgelemente (18, 19) des jeweiligen Balges (16, 17) durch Balgrahmen (18a, 19a) miteinander verbunden sind.

11. Übergang (10) nach Anspruch 10,
**dadurch gekennzeichnet,**
**dass** der erste und/oder zweite Flansch (20, 43) zwei längliche Schenkel (20a, 20b) aufweist, die durch die Balgrahmen (18, 19) klemmend erfasst sind.

12. Übergang (10) nach Anspruch 11,
**dadurch gekennzeichnet,**
**dass** die Schenkel (20a, 20b) einen Anschlussstutzen (27) bilden.

13. Übergang (10) nach einem der voranstehenden Ansprüche,
**dadurch gekennzeichnet,**
**dass** der ersten und/oder zweite Flansch (20, 43) einen Kompensator (50) aufweisen.

14. Übergang (10) nach Anspruch 13,
**dadurch gekennzeichnet,**
**dass** der Kompensator (50) im Bereich des Anschlussstutzens (27) am ersten und/oder zweiten Flansch (20, 43) angeordnet ist.

15. Übergang (10) nach Anspruch 13 oder 14,
**dadurch gekennzeichnet,**
**dass** der Kompensator (50) nach Art einer umlaufenden Welle oder Falte ausgebildet ist.

16. Übergang (10) nach einem der voranstehenden Ansprüche 3 bis 15,
**dadurch gekennzeichnet,**
**dass** der erste Flansch (20) im Deckenbereich des äußeren Balges und der zweite Flansch (43) im Bodenbereich des inneren Balges angeordnet ist.

17. Übergang (10) nach einem der Ansprüche 12 bis 16,
**dadurch gekennzeichnet,**
**dass** an dem Anschlussstutzen (27) des Flansches (20) eine Luftzuführung z. B. ein Gebläse (22) oder ein gegen die Fahrtrichtung ausrichtbarer Schlauch anordbar ist.

18. Gelenkfahrzeug
**gekennzeichnet durch,**
einen zwischen zwei Fahrzeugen des Gelenkfahrzeuges angeordneten Übergang (10) gemäß einem oder mehrerer der Ansprüche 1 bis 17.

## Claims

1. An articulated vehicle formed by a plurality of articulately connected vehicles or vehicle parts, for example a railway vehicle or an articulated bus, wherein a gangway (10) is disposed between two vehicles (2, 3) or vehicle parts, wherein the gangway (10) comprises an inner lining and, at a lateral distance from it, an outer lining, wherein at least one lining is configured as a bellows (16, 17), wherein the inner and/or outer lining are configured in a tunnel- or U-shaped circumferential manner, wherein a substantially closed hollow space can be formed by the inner and outer linings and both front walls of the vehicle or vehicle parts, wherein, in order to guide a medium through the one substantially closed hollow space, the hollow space comprises at least a first and a second opening for supplying or discharging a medium,
**characterized in that**
the at least one first opening is the opening in the outer bellows (16) and wherein a muff (20) rests on the at least one first opening.

2. The gangway (10) according to claim 1,
**characterized in that**
the at least one second opening is the opening in the inner bellows (17).

3. The gangway (10) according to claim 2,
**characterized in that**
the at least one second opening comprises a muff (43).

4. The gangway (10) according to one of the afore-mentioned claims,
**characterized in that**
at least the outer bellows (16) is configured as a corrugated or folded bellows with a plurality of successively arranged bellows elements (18) in the form of corrugations or folds.

5. The gangway (10) according to one of the afore-mentioned claims,
**characterized in that**
the inner and the outer bellows (16, 17) comprise several bellows elements (18, 19), wherein the muff (20, 43) rests on at least one opening of a single bellows element.

6. The gangway (10) according to one of the afore-mentioned claims,
**characterized in that**
a bellows arrangement (15) made of an inner and an outer bellows is joined with the front side of the vehicle body of the respective vehicle (2, 3) by respectively one connecting frame (9), wherein at least the first muff (20) rests on the first complete bellows element (18) of the outer bellows (16) following the connecting frame (9).

7. The gangway (10) according to one of the afore-mentioned claims,
**characterized in that**
the first and/or second muff (20, 43) comprise a conduit element for connecting with the bellows element (18), the extension of which in the longitudinal direction of the bellows element (18) is greater than transversely to the longitudinal direction of the bellows element (18).

8. The gangway (10) according to one of the afore-mentioned claims,
**characterized in that**
the first and/or second muff (20, 43) are made of a flexible material.

9. The gangway (10) according to claim 8,
**characterized in that**
the flexible material of the first and/or second muff (20, 43) includes at least one reinforcing material coated with an elastomer.

10. The gangway (10) according to one of the afore-mentioned claims,
**characterized in that**
the individual bellows elements (18, 19) of the respective bellows (16, 17) are joined with each other by bellows frames (18a, 19a).

11. The gangway (10) according to claim 10,
**characterized in that**
the first and/or second muff (20, 43) comprises two elongated limbs (20a, 20b), which are seized in a clamping manner by the bellows frames (18, 19).

12. The gangway (10) according to claim 11,
**characterized in that**
the limbs (20a, 20b) form a connecting piece (27).

13. The gangway (10) according to one of the afore-mentioned claims,
**characterized in that**
the first and/or second muff (20, 43) comprises an expansion joint (50).

14. The gangway (10) according to claim 13,
**characterized in that**
the expansion joint (50) is disposed in the area of the connecting piece (27) at the first and/or second muff (20, 43).

15. The gangway (10) according to claim 13 or 14,
**characterized in that**
the expansion joint (50) is configured in the manner of a circumferential corrugation or fold.

16. The gangway (10) according to one of the afore-mentioned claims 3 to 15,
**characterized in that**
the first muff (20) is disposed in the roof area of the outer bellows and the second muff (43) is disposed in the floor area of the inner bellows.

17. The gangway (10) according to one of the claims 12 to 16,
**characterized in that**
an air supply, e.g. a blower (22) or a hose that can be oriented against the direction of travel, can be disposed at the connecting piece (27) of the muff (20).

18. An articulated vehicle
**characterized by**
a gangway (10) according to one or several of the claims 1 to 17 disposed between two vehicles of the articulated vehicle.

## Revendications

1. Véhicule articulé formé de plusieurs véhicules ou parties de véhicule reliées les unes aux autres de manière articulée, par exemple un véhicule ferroviaire ou un bus articulé, où une passerelle (10) est disposée entre deux véhicules (2, 3) ou parties de véhicule, où la passerelle (10) comporte un revêtement intérieur ainsi qu'un revêtement extérieur espacé latéralement par rapport au revêtement intérieur, où au moins un revêtement prend la forme d'un soufflet (16, 17), où le revêtement intérieur et/ou extérieur est en forme de tunnel ou de U circonférentiel, où un espace creux substantiellement fermé peut être formé par les revêtements intérieur et extérieur et les deux parois frontales des véhicules ou parties de véhicule,
où pour conduire un milieu à travers ledit espace creux substantiellement fermé, l'espace creux comporte au moins une première et une seconde ouverture pour l'amenée ou l'évacuation du milieu,
**caractérisé en ce que**
l'au moins une première ouverture est l'ouverture dans le extérieur soufflet (16) et ou un manchon (20) repose sur l'au moins une première ouverture.

2. Passerelle (10) selon la revendication 1,
**caractérisée en ce que**
l'au moins une seconde ouverture est l'ouverture dans le soufflet intérieur (17).

3. Passerelle (10) selon la revendication 2,
**caractérisée en ce que**
l'au moins une seconde ouverture comporte un manchon (43).

4. Passerelle (10) selon l'une des revendications précédentes,
**caractérisée en ce qu'**
au moins le soufflet extérieur (16) prend la forme d'un soufflet ondulé ou à plis avec une pluralité d'éléments de soufflet (18) en forme d'ondulation ou de pli disposés bout-à-bout.

5. Passerelle (10) selon l'une des revendications précédentes,
**caractérisée en ce que**
les soufflets intérieur et extérieur (16, 17) comportent plusieurs éléments de soufflet (18, 19), où le manchon (20, 43) repose sur au moins une ouverture d'un seul élément de soufflet.

6. Passerelle (10) selon l'une des revendications précédentes,
**caractérisée en ce qu'**
un arrangement de soufflets (15) constitué d'un soufflet intérieur et d'un soufflet extérieur sont reliés par respectivement un cadre de raccordement (9) avec le côté frontal de la carrosserie du véhicule (2, 3) respectif, où au moins le premier manchon (20) repose sur le premier élément de soufflet (18) entier du soufflet extérieur (16) suivant le cadre de raccordement (9).

7. Passerelle (10) selon l'une des revendications précédentes,
**caractérisée en ce que**
le premier et/ou le second manchon (20, 43) comportent un élément de conduit pour la connexion avec l'élément de soufflet (18), l'extension duquel dans la direction longitudinale de l'élément de soufflet (18) est plus grande que transversalement à la direction longitudinale de l'élément de soufflet (18).

8. Passerelle (10) selon l'une des revendications précédentes,
**caractérisée en ce que**
le premier et/ou le second manchon (20, 43) sont formés d'un matériau flexible.

9. Passerelle (10) selon la revendication 8,
**caractérisée en ce que**
le matériau flexible du premier et/ou du second manchon (20, 43) comprend au moins un élément de renfort revêtu d'un élastomère.

10. Passerelle (10) selon l'une des revendications précédentes,
**caractérisée en ce que**
les éléments de soufflet (18, 19) individuels du soufflet respectif (16, 17) sont reliés les uns aux autres par des cadres de soufflet (18a, 19a).

11. Passerelle (10) selon la revendication 10,
**caractérisée en ce que**
le premier et/ou le second manchon (20, 43) comportent deux branches oblongues (20a, 20b) qui sont saisies de manière serrée par les cadres de soufflet (18, 19).

12. Passerelle (10) selon la revendication 11,
**caractérisée en ce que**
les branches (20a, 20b) forment un manchon de raccordement (27).

13. Passerelle (10) selon l'une des revendications précédentes,
**caractérisée en ce que**
le premier et/ou le second manchon (20, 43) comportent un compensateur de dilatation (50).

14. Passerelle (10) selon la revendication 13,
**caractérisée en ce que**
le compensateur de dilatation (50) est disposé dans la région du manchon de raccord (27) au niveau du premier et/ou du second manchon (20, 43).

15. Passerelle (10) selon la revendication 13 ou 14,
**caractérisée en ce que**
le compensateur de dilatation (50) est formé à la manière d'une ondulation ou d'un pli circonférentiels.

16. Passerelle (10) selon l'une des revendications précédentes 3 à 15,
**caractérisée en ce que**
le premier manchon (30) est disposé dans la région du plafond du soufflet extérieur et le second manchon (43) est disposé dans la région du sol du soufflet intérieur.

17. Passerelle (10) selon l'une des revendications 12 à 16,
**caractérisée en ce que**
un alimentation en air, par exemple une soufflerie (22) ou un tuyau orientable dans le sens de la marche, peut être disposée au niveau du manchon de raccordement (27) du manchon (20).

18. Véhicule articulé,
**caractérisé par**
une passerelle selon une ou plusieurs des revendications 1 à 17 disposée entre deux véhicules d'un véhicule articulé.
